# EUROPEAN PATENT APPLICATION

(11) **EP 3 977 839 A1**
(43) Date of publication of application: **06.04.2022**
(21) Application number: 20813315.7
(22) Date of filing: 10.03.2020
(51) Int. Cl.: A01B 69/00, G05D 1/00, G05D 1/02

(54) **AUTONOMOUS TRAVEL SYSTEM**

(30) Priority: 31.05.2019 JP 2019102199
(71) Applicant: Yanmar Power Technology Co., Ltd., Osaka-shi Osaka 530-8311 (JP)
(72) Inventor: KOHORI, Yuki, Osaka-shi, Osaka 530-0014 (JP); NAKAMURA, Shoichi, Osaka-shi Osaka 530-0014 (JP)
(74) Representative: Dennemeyer & Associates S.A.
(86) International application number: PCT/JP2020/010146
(87) International publication number: WO 2020/240982

(57) **Abstract**

This autonomous travel system comprises: a map acquisition unit; a field specification unit; a route creation unit; and a travel control unit. The map acquisition unit acquires an orthophoto. The field specification unit specifies a field area included in a map of the orthophoto acquired by the map acquisition unit. The route creation unit creates a travel route for causing a rice transplanter to travel autonomously on the field area specified by the field specification unit. The travel control unit causes a work vehicle to travel autonomously along the travel route created by the route creation unit.

## Description

### TECHNICAL FIELD

The present invention relates primarily to an autonomous travel system that causes a work vehicle to autonomously travel along a travel route after a field is registered.

### BACKGROUND ART

In a system with which a work vehicle autonomously travels in a field, a travel route for autonomous travel is created after the shape (position) of the field is registered. Furthermore, as the distance and area are not accurately represented on a map that is made plane by using, for example, Mercator projection, it is difficult to register the accurate shape of the field from this type of map. Therefore, as described in Patent Literature 1, the process to register the position of the field is performed after a work vehicle actually travels along the outer periphery of the field.

### CITATION LIST

### Patent Literature

Patent Literature 1: Japanese Unexamined Patent Application Publication No. 2017-127289

### DISCLOSURE OF INVENTION

### PROBLEMS TO BE SOLVED BY THE INVENTION

However, causing the work vehicle to travel along the outer periphery of the field is time-consuming and troublesome for users.

The present invention has been made in consideration of the above circumstances, and its primary object is to provide an autonomous travel system with which it is possible to properly register a field without the actual travel in the field.

### MEANS FOR SOLVING THE PROBLEMS

### EFFECT OF THE INVENTION

The problem to be solved by the present invention is as described above, and the means for solving this problem and an effect thereof will be described below.

According to an aspect of the present invention, an autonomous travel system having the configuration below is provided. Specifically, the autonomous travel system includes a map acquisition unit, a field specifying unit, a route creation unit, and a travel control unit. The map acquisition unit acquires an orthophoto. The field specifying unit specifies a field area included in a map of the orthophoto acquired by the map acquisition unit. The route creation unit creates a travel route along which a work vehicle autonomously travels in the field area specified by the field specifying unit. The travel control unit causes the work vehicle to autonomously travel along the travel route created by the route creation unit.

Thus, by using the field area created based on the orthophoto, it is possible to properly register the field and conduct autonomous travel along an appropriate travel route without the actual travel in the field to register the field.

The above-described autonomous travel system preferably has the configuration below. Specifically, the autonomous travel system includes a display unit that displays an image. The display unit displays an image combining the map acquired by the map acquisition unit and the field area specified by the field specifying unit.

Thus, by specifying the field area from the map, the position of the specified field matches the position of the field on the map. As a result, the display positions of them may match on the screen of the display unit.

The above-described autonomous travel system preferably has the configuration below. Specifically, the autonomous travel system includes a division unit and a correction unit. The division unit further divides the field area into a plurality of unit field areas. The correction unit removes a designated area from the unit field area or adds a designated area to the unit field area to update the unit field area.

Thus, the unit field area may be updated so as to have an appropriate shape in a case where an unnecessary area is set as a unit field area or a necessary area is not set as a unit field area.

The above-described autonomous travel system preferably has the configuration below. Specifically, the autonomous travel system includes a division unit and a correction unit. The division unit further divides the field area into a plurality of unit field areas. The correction unit combines the plurality of designated unit field areas to obtain the one new unit field area.

Thus, it is possible to combine unit field areas in a situation where, for example, it is desirable to process them as one unit field area although they are divided as a plurality of unit field areas.

The above-described autonomous travel system preferably has the configuration below. Specifically, the autonomous travel system includes a division unit and a correction unit. The division unit further divides the field area into a plurality of unit field areas. The correction unit divides the one designated unit field area to obtain the plurality of new unit field areas.

Thus, it is possible to divide a unit field area in a situation where, for example, it is desirable to process it as a plurality of unit field areas although it is divided as one unit field area.

### BRIEF DESCRIPTION OF DRAWINGS

FIG. 1 is a side view illustrating an overall configuration of a rice transplanter used in an autonomous travel system according to an embodiment of the present invention.
FIG. 2 is a plan view of the rice transplanter.
FIG. 3 is a block diagram illustrating a primary configuration of the autonomous travel system.
FIG. 4 is a diagram illustrating a travel route created in a field.
FIG. 5 is a flowchart illustrating a process to acquire an orthophoto and register a field.
FIG. 6 is a diagram conceptually illustrating a process to combine an orthophoto and a field area to create a superimposed image.
FIG. 7 is a diagram illustrating how field information is displayed for the combined image of the orthophoto and the field area.
FIG. 8 is a diagram illustrating a process to change a shape of a specified field.
FIG. 9 is a diagram illustrating a process to combine specified fields to change them into one field.
FIG. 10 is a diagram illustrating a process to divide a specified field to change it into two fields.

### DESCRIPTION OF EMBODIMENTS

Next, an embodiment of the present invention will be described with reference to the drawings.

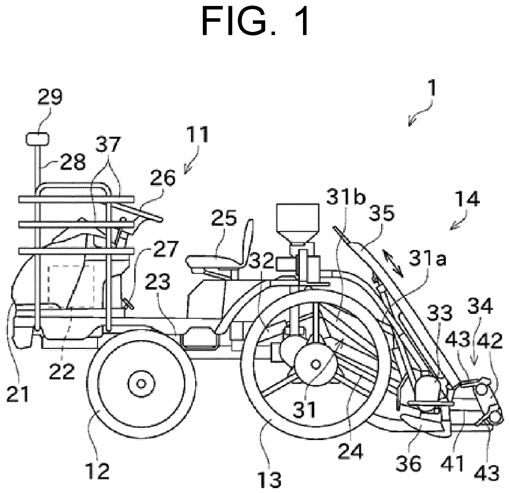

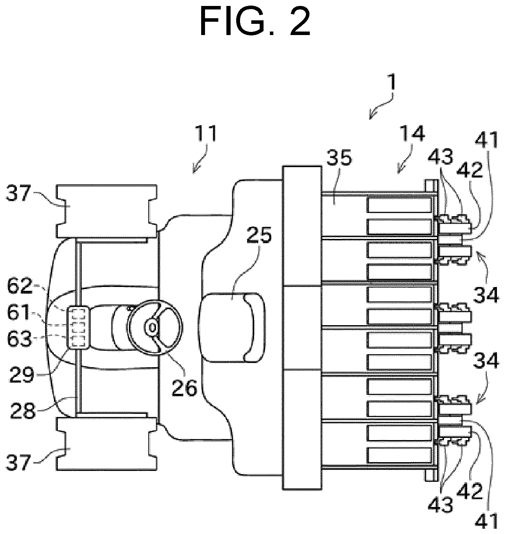

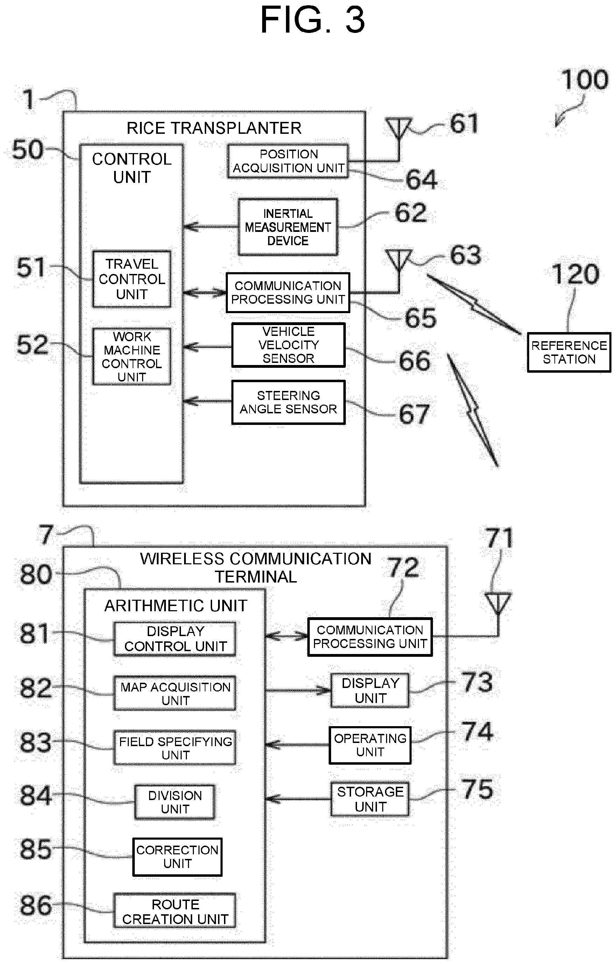

FIG. 1 is a side view of a rice transplanter 1 used in an autonomous travel system 100 according to an embodiment of the present invention. FIG. 2 is a plan view of the rice transplanter 1. FIG. 3 is a block diagram illustrating a primary configuration of the autonomous travel system 100.

The autonomous travel system 100 according to the present embodiment is a system that causes the rice transplanter 1, which performs rice planting (seedling planting) in a field, to autonomously travel. The autonomous travel means that a device related to travel is controlled by a control device included in the rice transplanter 1 so that at least steering is autonomously performed along a predetermined route. Furthermore, a configuration may be such that a vehicle velocity, a work by a work machine, or the like, in addition to steering is autonomously performed. During the autonomous travel, there may be a case where a person is riding on the rice transplanter 1 and a case where no person is riding on the rice transplanter 1. Moreover, the work vehicle according to the present invention is not limited to the rice transplanter 1, but may be for example a seeder, a tractor, or a combine harvester.

As illustrated in FIGS. 1 and 2, the rice transplanter 1 includes a vehicle body portion 11, front wheels 12, rear wheels 13, and a planting portion (work machine) 14. The front wheels 12 and the rear wheels 13 are provided as pairs on the right and left of the vehicle body portion 11.

The vehicle body portion 11 includes a hood 21. The hood 21 is provided in a front portion of the vehicle body portion 11. An engine 22 is provided inside the hood 21.

Power generated by the engine 22 is transmitted to the front wheels 12 and the rear wheels 13 via a transmission case 23. The power is also transmitted to the planting portion 14 via the transmission case 23 and a PTO shaft 24 provided in a rear portion of the vehicle body portion 11.

The vehicle body portion 11 further includes a driver seat 25 where the user sits and a plurality of operating tools. The driver seat 25 is provided between the front wheels 12 and the rear wheels 13 in a front-back direction of the vehicle body portion 11. The operating tools include, for example, a steering wheel 26 and a gearshift operation pedal 27.

The user operates the steering wheel 26 to change the traveling direction of the rice transplanter 1. The user operates the gearshift operation pedal 27 to adjust the traveling velocity (vehicle velocity) of the rice transplanter 1.

The planting portion 14 is provided behind the vehicle body portion 11. The planting portion 14 is coupled to the vehicle body portion 11 via a lifting/lowering link mechanism 31. The lifting/lowering link mechanism 31 is configured by a parallel link including a top link 31a and a lower link 31b.

A lifting/lowering cylinder 32 is coupled to the lower link 31b. As the lifting/lowering cylinder 32 expands and contracts, the planting portion 14 is lifted and lowered in a vertical direction with respect to the vehicle body portion 11. Furthermore, although the lifting/lowering cylinder 32 is a hydraulic cylinder according to the present embodiment, an electric cylinder may be used.

The planting portion 14 includes a planting entry case portion 33, a plurality of planting units 34, a seedling placement table 35, a plurality of floats 36, and a preliminary seedling table 37. The planting portion 14 may sequentially supply a seedling to each of the planting units 34 from the seedling placement table 35 to continuously plant the seedlings.

Each of the planting units 34 includes a planting transmission case portion 41 and a rotary case portion 42. Power is transmitted to the planting transmission case portion 41 via the PTO shaft 24 and the planting entry case portion 33.

The rotary case portion 42 is rotatably attached to the planting transmission case portion 41. The rotary case portions 42 are provided on both sides of the planting transmission case portion 41 in a vehicle width direction. Two planting claws 43 are attached to one side of each of the rotary case portions 42.

The two planting claws 43 are aligned in the traveling direction of the rice transplanter 1. The two planting claws 43 are displaced in accordance with the rotation of the rotary case portion 42. By the displacement of the two planting claws 43, the seedlings corresponding to one row are planted.

The seedling placement table 35 is provided at a front upper side of the planting units 34. On the seedling placement table 35, a seedling mat may be placed. The seedling placement table 35 is configured so as to supply the seedlings of the seedling mat placed on the seedling placement table 35 to each of the planting units 34.

Specifically, the seedling placement table 35 is configured to be movable transversely (slidable in a transverse direction) so as to reciprocate in the vehicle width direction. Furthermore, the seedling placement table 35 is configured to convey the seedling mat longitudinally downward and intermittently at the end of reciprocating movement of the seedling placement table 35.

The floats 36 are provided in a lower portion of the planting portion 14 so as to be swingable. A lower surface of the float 36 may be in contact with the surface of the field to obtain the stable planting posture of the planting portion 14 with respect to the surface of the field.

The preliminary seedling tables 37 are provided as a pair on the right and left of the vehicle body portion 11. The preliminary seedling tables 37 are provided on the outer side of the hood 21 in the vehicle width direction. On the preliminary seedling table 37, a seedling box containing preliminary mat seedlings may be placed.

Upper portions of the preliminary seedling tables 37 in a pair on the right and left are coupled to each other via a coupling frame 28 extending in the vertical direction and the vehicle width direction. At the center of the coupling frame 28 in the vehicle width direction, a chassis 29 is provided. In the chassis 29, a positioning antenna 61, an inertial measurement device 62, and a communication antenna 63 are provided.

The positioning antenna 61 receives radio waves (positioning signals) from a positioning satellite that forms a satellite positioning system (GNSS).

The inertial measurement device 62 specifies the posture, acceleration, and the like, of the rice transplanter 1. The inertial measurement device 62 includes three gyroscope sensors (angular velocity sensors) and three acceleration sensors. This allows the inertial measurement device 62 to specify the angular velocity of the posture change of the rice transplanter 1 and the accelerations in the three axial directions (front-back direction, right-left direction, and up-down direction). Furthermore, the posture (roll angle, pitch angle, and yaw angle) of the rice transplanter 1 may be specified by integrating the angular velocity.

The communication antenna 63 is an antenna to perform a wireless communication with a wireless communication terminal 7 illustrated in FIG. 3.

A control unit 50 includes an arithmetic device, a storage device, an input/output unit, and the like, which are not illustrated. The storage device stores various types of programs and data, and the like. The arithmetic device may read and execute various programs from the storage device. The control unit 50 may operate as a travel control unit 51 and a work machine control unit 52 due to the cooperation of the above-described hardware and software. The control unit 50 may be a single piece of hardware or a plurality of pieces of hardware that may communicate with each other. Further, the control unit 50 is coupled to a position acquisition unit 64, a communication processing unit 65, a vehicle velocity sensor 66, and a steering angle sensor 67 in addition to the inertial measurement device 62 described above.

The position acquisition unit 64 is electrically connected to the positioning antenna 61. The position acquisition unit 64 acquires, from a positioning signal received by the positioning antenna 61, the position of the rice transplanter 1 as for example information on the latitude and the longitude. The position acquisition unit 64 receives a positioning signal from a reference station 120 by an appropriate method and then performs positioning using the known GNSS-RTK method. In place of this, for example, positioning using differential GNSS, independent positioning, or the like, may be performed. Alternatively, position acquisition based on the radio field intensity of a wireless LAN, or the like, position acquisition by inertial navigation, etc. may also be performed.

The communication processing unit 65 is electrically connected to the communication antenna 63. The communication processing unit 65 may perform modulation processing or demodulation processing by an appropriate method to transmit and receive data to and from the wireless communication terminal 7.

The vehicle velocity sensor 66 detects the vehicle velocity of the rice transplanter 1. The vehicle velocity sensor 66 is provided at an appropriate position of the rice transplanter 1, e.g., at a wheel axis of the front wheel 12. In this case, the vehicle velocity sensor 66 generates the pulse corresponding to the rotation of the wheel axis of the front wheel 12. Data on a detection result obtained by the vehicle velocity sensor 66 is output to the control unit 50.

The steering angle sensor 67 detects the steering angle of the front wheel 12. The steering angle sensor 67 is provided at an appropriate position of the rice transplanter 1, e.g., at a kingpin, not illustrated, provided on the front wheel 12. Furthermore, the steering angle sensor 67 may be provided on the steering wheel 26. Data on a detection result obtained by the steering angle sensor 67 is output to the control unit 50.

The travel control unit 51 performs control regarding the travel of the rice transplanter 1. For example, the travel control unit 51 may perform vehicle velocity control and steering control. The travel control unit 51 may simultaneously perform both vehicle velocity control and steering control or may perform only steering control. In the latter case, the user uses the gearshift operation pedal 27 to control the vehicle velocity of the rice transplanter 1.

During the vehicle velocity control, the vehicle velocity of the rice transplanter 1 is adjusted based on a predetermined condition. During the vehicle velocity control, specifically, the travel control unit 51 performs control so that the current vehicle velocity obtained from a detection result of the vehicle velocity sensor 66 becomes close to a target vehicle velocity. This control is performed by changing at least either the transmission gear ratio of a gearshifter in the transmission case 23 or the rotational velocity of the engine 22. Moreover, this vehicle velocity control includes the control to bring the vehicle velocity to zero so that the rice transplanter 1 stops.

The steering control is the control to adjust the steering angle of the rice transplanter 1 based on a predetermined condition. During the steering control, specifically, the travel control unit 51 performs control so that the current steering angle obtained from a detection result of the steering angle sensor 67 becomes close to a target steering angle. This control is performed by, for example, driving a steering actuator provided on a rotary shaft of the steering wheel 26. Moreover, with regard to the steering control, the travel control unit 51 may directly adjust the steering angle (wheel) of the front wheel 12 of the rice transplanter 1 instead of the rotation angle (steering angle) of the steering wheel 26.

The work machine control unit 52 may control the operation (lifting/lowering operation, planting work, etc.) of the planting portion 14 based on a predetermined condition.

The wireless communication terminal 7 is a tablet terminal including a communication antenna 71, a communication processing unit 72, a display unit 73, an operating unit 74, a storage unit 75, and an arithmetic unit 80. Furthermore, the wireless communication terminal 7 is not limited to a tablet terminal, but may be a smartphone or a notebook computer. Although the wireless communication terminal 7 performs various kinds of processing regarding autonomous travel of the rice transplanter 1, the control unit 50 of the rice transplanter 1 may perform at least part of such processing. Conversely, the wireless communication terminal 7 may perform at least a part of the various kinds of processing regarding autonomous travel conducted by the control unit 50 of the rice transplanter 1.

The communication antenna 71 is a short-range communication antenna to perform a wireless communication with the rice transplanter 1. The communication processing unit 72 is electrically connected to the communication antenna 71. The communication processing unit 72 performs modulation processing on transmission signals, demodulation processing on reception signals, etc. Furthermore, either the rice transplanter 1 or the wireless communication terminal 7 includes a mobile communication antenna to perform a communication using a mobile phone line and the Internet. Thus, for example, part of the information stored in the rice transplanter 1 or the wireless communication terminal 7 may be stored on an external server, or information may be acquired from an external server.

The display unit 73 is a liquid crystal display or an organic EL display and is configured to display images. The display unit 73 may display, for example, information about autonomous travel, information about settings of the rice transplanter 1, detection results of various sensors, warning information, etc.

The operating unit 74 includes a touch panel and a hardware key. The touch panel is provided on the display unit 73 in a superimposed manner and is capable of detecting operations by a user's finger, or the like. The hardware key is provided on a side surface of a chassis of the wireless communication terminal 7, around the display unit 73, or the like, and may be operated by user's pressing. Further, the wireless communication terminal 7 may be configured to include only either the touch panel or the hardware key.

The storage unit 75 is a non-volatile memory such as a flash memory or a hard disk. The storage unit 75 stores, for example, information about autonomous travel.

The arithmetic unit 80 is an arithmetic device such as a CPU. The arithmetic unit 80 may read and execute various programs from the storage unit 75. The arithmetic unit 80 may operate as a display control unit 81, a map acquisition unit 82, a field specifying unit 83, a division unit 84, a correction unit 85, and a route creation unit 86 due to the cooperation of the above-described hardware and software.

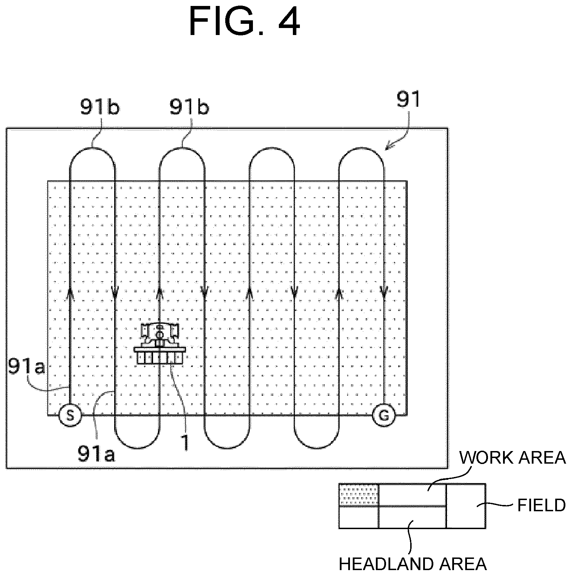

Next, with reference to FIG. 4, a field and a travel route for autonomous travel will be described. The field includes a work area and a headland area. The work area is an area located at a central part of the field to perform a work. The headland area is an area located outside the work area and is used to appropriately perform a work in the work area. For example, the headland area is used to cause the rice transplanter 1, which has entered the field, to move to a start position of the work in the work area. Further, the headland area is also used as an area to cause the rice transplanter 1 to turn.

The route creation unit 86 creates a travel route 91 along which the rice transplanter 1 autonomously travels. As illustrated in FIG. 4, the travel route 91 includes a plurality of linear routes 91a and a plurality of turning routes 91b. Furthermore, a start position (S in FIG. 4) and an end position (G in FIG. 4) are set for the travel route 91. Furthermore, the travel route 91 illustrated in FIG. 4 is an example, and the rice transplanter 1 may autonomously travel along a route having a different feature. The above-described travel control unit 51 performs at least steering control so that the rice transplanter 1 moves along the travel route 91.

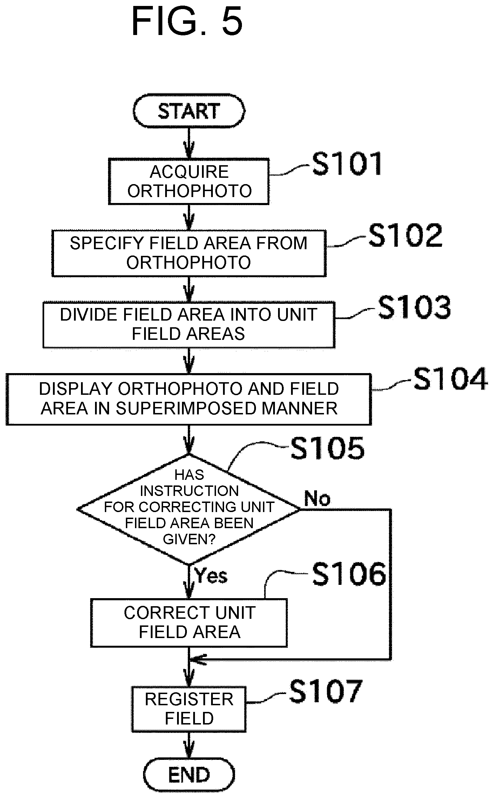

Next, with reference to FIGS. 5 to 10, the process to register a field is described. Although the wireless communication terminal 7 performs the process illustrated in the flowchart of FIG. 5, the control unit 50 may perform some of the process. Furthermore, the image described below is displayed on the wireless communication terminal 7, but may also be displayed on a display at the side of the rice transplanter 1 or on another terminal.

First, the map acquisition unit 82 of the wireless communication terminal 7 acquires an orthophoto (S101). Orthophotos are obtained by conducting orthorectification on aerial photographs (central projection) captured by an aircraft or satellite to correct a distortion by orthographic projection transformation. Orthophotos may accurately represent the shape and position of terrain. The map acquisition unit 82 may acquire an orthophoto stored in a storage device of the rice transplanter 1 or the wireless communication terminal 7 or may communicate with an external unit to acquire an orthophoto. In the case of a communication with an external unit, it is preferable to select and acquire an orthophoto near the position acquired by the position acquisition unit 64. Furthermore, in this description, the orthophoto includes not only an image obtained by conducting orthorectification on an aerial photograph but also an image obtained by conducting additional correction on the image having undergone orthorectification. The additional correction includes, for example, correction to convert an orthophoto in a photographic form into a linear drawing form and correction to add information such as a building and a place name.

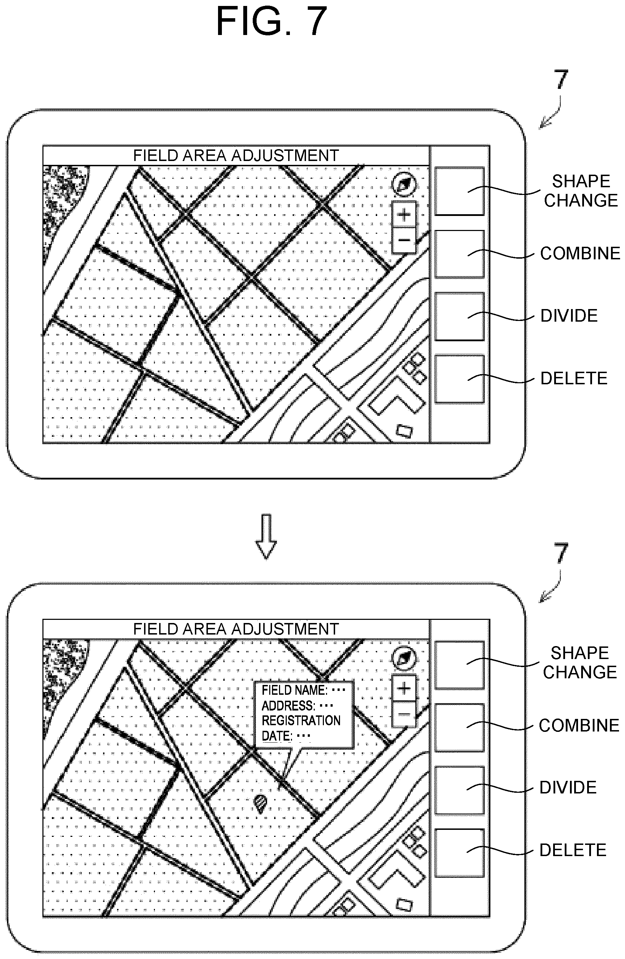

Subsequently, the field specifying unit 83 of the wireless communication terminal 7 specifies a field area based on the acquired orthophoto (S102). In the example illustrated in FIG. 7, the area marked with dots corresponds to a field area. The field specifying unit 83 executes for example image recognition on the orthophoto to specify a field area. The field area is an area where a field (a place to grow crops) exists. Here, the field contains for example soil or crops and often has a geometric configuration such as a polygon. Furthermore, a plurality of fields is often adjacently located. An orthophoto is analyzed based on these tendencies so as to specify a field. Alternatively, machine learning may be applied to an image of the field to configure a model, and this model may be used to specify the field included in the orthophoto. Moreover, there is no limitation on the configuration in which the field specifying unit 83 specifies the field from the orthophoto, and information (vector data such as polygon data) indicating the position and shape of the field may be acquired from, for example, an external server.

Subsequently, the division unit 84 of the wireless communication terminal 7 divides the field area into unit field areas (S103). A unit field area is a division of a field area into each continuous field area (in other words, each one of the fields). In the example illustrated in FIG. 7, the area surrounded by a dashed line is a unit field area. For example, when the field area specified at Step S102 is divided into two by a road, or the like, the division unit 84 sets the two divided areas as unit field areas. Furthermore, the division unit 84 assigns identification information to each unit field area. Therefore, information (e.g., a field name attached by a user, registration date, etc.) may be registered in association with a unit field area.

Moreover, instead of the configuration in which the division unit 84 divides the field area into unit field areas, the wireless communication terminal 7 may acquire the information on divided unit field areas from an external unit.

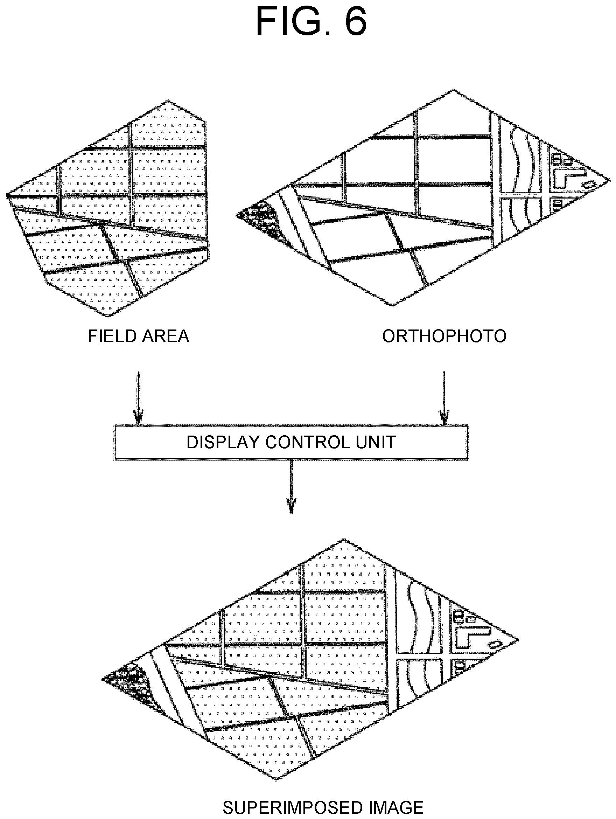

Subsequently, the display control unit 81 of the wireless communication terminal 7 causes the wireless communication terminal 7 to display the orthophoto and the field area in a superimposed manner (S104). As illustrated in FIG. 6, the display control unit 81 superimposes the orthophoto and the image representing the field area created from the orthophoto to create a display image. Then, as illustrated in FIG. 7, the display control unit 81 performs the process to display this display image on the display unit 73 of the wireless communication terminal 7. As the orthophoto contains information (building, river, road, etc.) other than the field, displaying the orthophoto and the field area in a superimposed manner makes it easy for the user to identify the desired field.

Furthermore, although the orthophoto and the image representing the field area are both superimposed according to the present embodiment, another image may be further superimposed. Another image to be superimposed may be a map associating a position (area) with usage, such as a land use map or city planning map.

Furthermore, as a map created by the commonly used Mercator projection contains distortions, the accurate shape of the field is sometimes not represented. Therefore, there is a possibility that, when the map created by Mercator projection and the field area created by the actual travel of the rice transplanter 1 are superimposed, the field represented on the map does not match the created field area. In this respect, as the orthophoto represents the accurate shape of the field, the field represented on the map matches the created field area. Thus, the map and the field area may be superimposed without providing the user a feeling of strangeness.

Hereinafter, the image obtained by superimposing the orthophoto and the field area is referred to as a superimposed image. The user checks the superimposed image illustrated in FIG. 7. For example, as illustrated in the lower section of FIG. 7, the user selects a unit field area so as to check the information about the selected unit field area. The information about the unit field area includes, for example, the field name, address, and registration date. Furthermore, the field name may be changed in accordance with the user input.

Furthermore, the user views the superimposed image to check the shape and division of a unit field area. The user determines whether the unit field area needs to be corrected, and if correction is necessary, operates the wireless communication terminal 7 to make correction.

As illustrated in FIG. 7, the wireless communication terminal 7 displays buttons indicating shape changing, combining, dividing, and deleting. These buttons are used to correct a unit field area. The correction unit 85 of the wireless communication terminal 7 determines whether the instruction for correction has been given based on whether the user operates these buttons (S105). Then, when it is determined that these buttons have been operated, the correction unit 85 corrects the unit field area in accordance with the user's operation (S106).

The correction on the unit field area is described in detail below. The autonomous travel system 100 according to the present embodiment is configured so as to execute shape changing, combining, dividing, and deleting as correction on the unit field area.

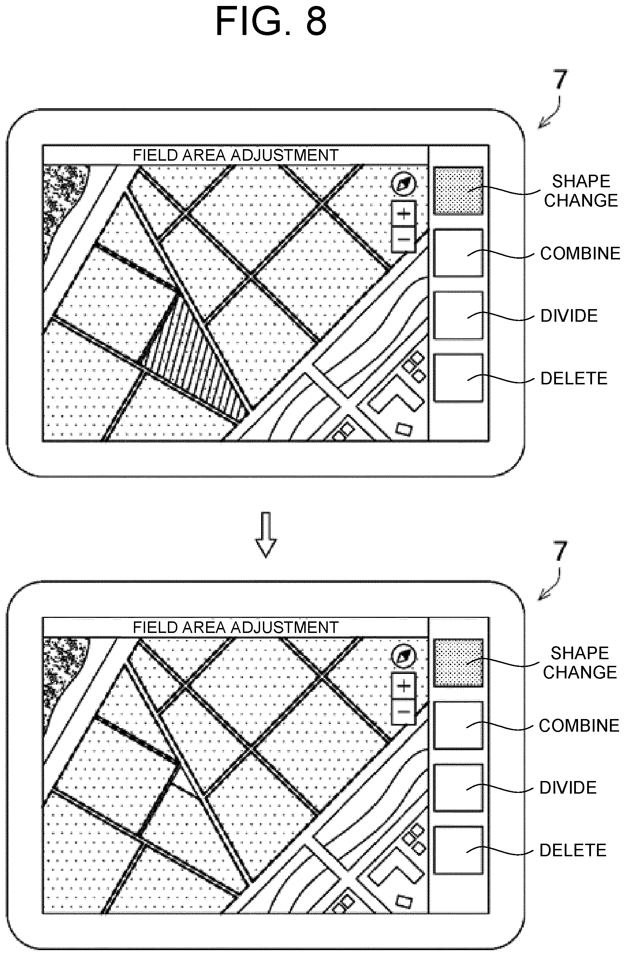

First, the shape change of the unit field area is described with reference to FIG. 8. For example, when the shape of the unit field area is different from the actual field, or when there is an undesired area that is not to be registered as a field because of the difficulty in work due to its shape, difference in level, etc., the user gives an instruction to change the shape of the unit field area.

Specifically, the user operates the button "Shape Change" displayed on the wireless communication terminal 7, selects one unit field area, which is the target to be changed in shape, from the unit field areas displayed on the wireless communication terminal 7, and confirms the selection. Then, the user gives an instruction to change the shape in detail. The shape change includes the process to add an additional area to the selected unit field area and the process to remove a removal area from the selected unit field area.

Although there are various methods for designating an additional area and a removal area, a configuration may be such that the user draws a line with the finger, a stylus, or the like, on the map displayed on the wireless communication terminal 7 to designate an additional area or a removal area. Here, the correction unit 85 may adjust the angle of the line drawn by the user such that the line becomes parallel to any edge of the selected unit field area. This is because it is desirable that the edge of the field is parallel as a plurality of parallel linear routes is often created as travel routes. Furthermore, instead of the process to draw the line by the user, a configuration may be such that the user performs the process to move the edge line (including an extended line of the edge line) of the selected unit field area to designate an additional area or a removal area. Here, the correction unit 85 may adjust the moving direction, or the like, of the edge line such that the edge line of the unit field area moves in parallel.

The correction unit 85 adds an additional area to the selected unit field area or removes a removal area from the selected unit field area to change the shape of the unit field area.

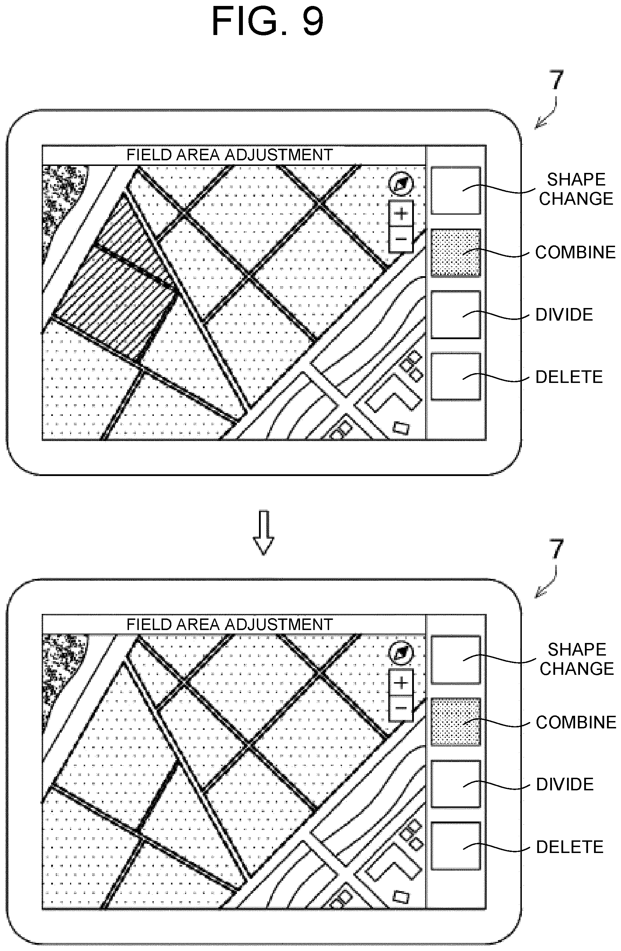

With reference to FIG. 9, combining the unit field areas is described below. When one field is specified as a plurality of unit field areas, the user gives an instruction to combine the unit field areas. For example, one field may be specified as a plurality of unit field areas in a case where there are two fields when the orthophoto is taken and then the fields are combined into one by removing a farm road, or the like, or in a case where a certain line appearing on the field is mistakenly recognized as a road during image recognition of the orthophoto.

The user operates the button "Combine" displayed on the wireless communication terminal 7, selects a plurality of unit field areas, which is the target to be combined, from the unit field areas displayed on the wireless communication terminal 7, and confirms the selection. Furthermore, after a first unit field area is selected, the correction unit 85 performs the process to specify unit field areas whose distance from the selected first unit field area is less than a threshold so that only the unit field areas are selectable. This may prevent the selection of unit field areas that are far apart and cannot be combined. Alternatively, after the user selects and confirms a plurality of unit field areas, the correction unit 85 may determine based on the distance whether the selected unit field areas may be combined, and if it is difficult to combine them, display a message on the wireless communication terminal 7.

The correction unit 85 combines the unit field areas selected by the user to create a new unit field area. Furthermore, new identification information or the identification information on any of the unit field areas before combining may be assigned to the new unit field area.

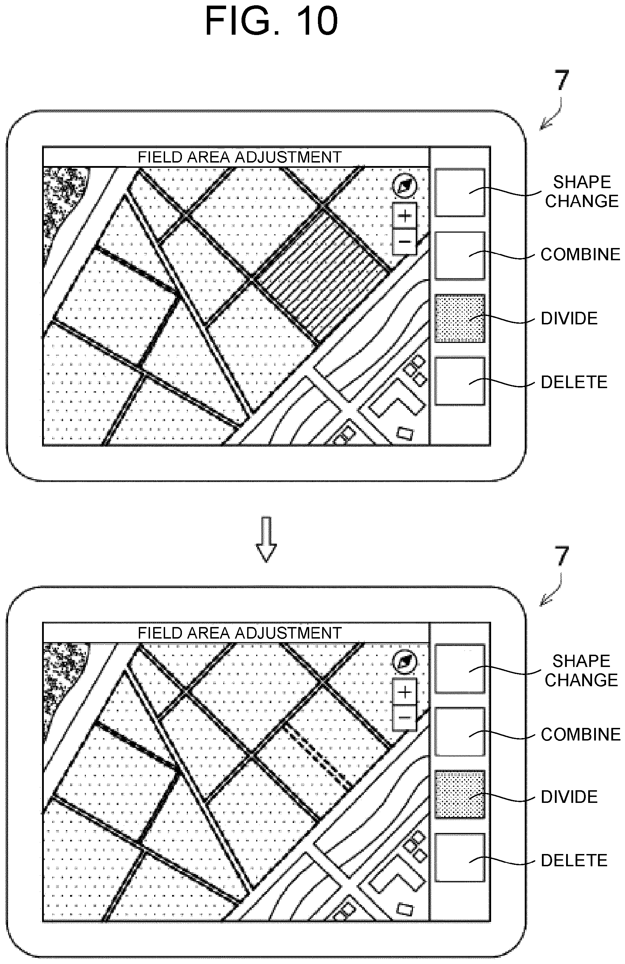

Division of the unit field area is described below with reference to FIG. 10. When a plurality of fields is specified as one unit field area, the user gives an instruction to divide the unit field area. For example, a plurality of fields may be specified as one unit field area in a case where there is one field when the orthophoto is taken and then the field is divided into a plurality of fields due to the construction of a farm road, or the like, or in a case where it is difficult to recognize a farm road, or the like, in the field during image recognition of the orthophoto.

The user operates the button "Divide" displayed on the wireless communication terminal 7, selects one unit field area, which is the target to be divided, from the unit field areas displayed on the wireless communication terminal 7, and confirms the selection. Then, the user designates a specific division position. The division position is designated when the user draws a line (straight line or curve) or moves an edge line in the same way as for shape change. Furthermore, the division position may be designated to divide the unit field area into two, or the division position may be designated to divide the unit field area into three or more. Moreover, the line width (the width of a farm road) may be designated by, for example, inputting a numerical value. The portion corresponding to the line width is excluded from the field area after division.

Furthermore, for division at an appropriate position, a configuration may be such that an instruction for division is given by using a travel trajectory obtained by the actual travel of the rice transplanter 1. Specifically, the rice transplanter 1 travels along a dike of the field to be divided. Then, this travel trajectory is moved in parallel in accordance with the width (designated value) of the farm road. Then, the travel trajectory and the line obtained by moving the travel trajectory in parallel are used as division positions. Furthermore, as the area between the two division positions (division lines) corresponds to a farm road and is therefore excluded from the field area after division.

The correction unit 85 divides the unit field area at the designated division position to create a plurality of new unit field areas. New identification information is assigned to the new unit field area. Furthermore, the identification information on the unit field area before division may be assigned to one of the new unit field areas.

Deletion of the unit field area is described below. The user gives an instruction to delete a unit field area when an unnecessary field (e.g., an unmanaged field) is specified as a unit field area or an area that is not a field is specified as a unit field area. Specifically, the button "Delete" displayed on the wireless communication terminal 7 is operated, one or more unit field areas, which are the target to be deleted, are selected from the unit field areas displayed on the wireless communication terminal 7, and the selection is confirmed.

The correction unit 85 performs the process to delete the selected unit field area. Furthermore, the correction unit 85 may actually delete the information on the unit field area to be deleted or may simply hide the unit field area to be deleted. In the latter case, the deleted unit field area may be confirmed later or restored.

Furthermore, when the target unit field area is selected for the above-described operations of shape changing, combining, dividing, and deleting, only the unit field area that is displayed in whole on the wireless communication terminal 7 may be selected. That is, in the configuration, even when only part of the unit field area is displayed on the wireless communication terminal 7, the unit field area is not selectable. This allows the correction of the unit field area only in a situation where the user is able to confirm the entire shape of the unit field area.

After the correction of the unit field area has been completed as described above, for example, the user operates the confirmation button to instruct the wireless communication terminal 7 that the correction of the unit field area has been completed. In response to this instruction, the arithmetic unit 80 stores the information on the corrected unit field area in the storage unit 75 or an external server to register the field (S107).

When the route creation unit 86 creates a travel route, information on the registered field is referred to. Here, a map created by the commonly used Mercator projection contains distortions, and therefore when a field is registered based on the map, the field having the accurate shape or the field having the shape intended by the user is sometimes not registered. Conversely, as the orthophoto represents the accurate shape of the field, the field having the accurate shape or the shape intended by the user may be easily registered based on the map.

As described above, the autonomous travel system 100 according to the present embodiment includes the map acquisition unit 82, the field specifying unit 83, the route creation unit 86, and the travel control unit 51. The map acquisition unit 82 acquires an orthophoto. The field specifying unit 83 specifies the field area included in the map of the orthophoto acquired by the map acquisition unit 82. The route creation unit 86 creates a travel route along which the rice transplanter 1 autonomously travels in the field area specified by the field specifying unit 83. The travel control unit 51 causes the rice transplanter 1 to autonomously travel along the travel route created by the route creation unit 86.

Thus, by using the field area created based on the orthophoto, it is possible to properly register the field and conduct autonomous travel along an appropriate travel route without the actual travel in the field to register the field.

Furthermore, the autonomous travel system 100 according to the present embodiment includes the display unit 73 that displays an image. The display unit 73 displays the image combining the map acquired by the map acquisition unit and the field area specified by the field specifying unit 83.

Thus, by specifying the field area from the map, the position of the specified field matches the position of the field on the map. As a result, the display positions of them may match on the screen of the display unit.

Furthermore, the autonomous travel system 100 according to the present embodiment includes the division unit 84 and the correction unit 85. The division unit 84 further divides the field area into a plurality of unit field areas. The correction unit 85 removes a designated area from the unit field area or adds a designated area to the unit field area to update the unit field area.

Thus, the unit field area may be updated so as to have an appropriate shape in a case where an unnecessary area is set as a unit field area or a necessary area is not set as a unit field area.

Furthermore, the correction unit 85 in the autonomous travel system 100 according to the present embodiment combines the plurality of designated unit field areas to obtain one new unit field area.

Thus, it is possible to combine unit field areas in a situation where, for example, it is desirable to process them as one unit field area although they are divided as a plurality of unit field areas.

Further, the correction unit 85 in the autonomous travel system 100 according to the present embodiment divides one designated unit field area to obtain a plurality of new unit field areas.

Thus, it is possible to divide a unit field area in a situation where, for example, it is desirable to process it as a plurality of unit field areas although it is divided as one unit field area.

Although preferred embodiments of the present invention have been described above, the above-described configuration may be modified as below, for example.

The flowchart described in the above embodiment is an example; some processing may be omitted, the content of some processing may be changed, or new processing may be added. For example, when the wireless communication terminal 7 displays only the field area, the process at Step S104 may be omitted. Further, when the unit field area may be accurately divided based on the above-described land use map, or the like, the inquiry regarding correction of the unit field area may be omitted.

In the above embodiment, all of shape changing, combining, dividing, and deleting may be performed as correction on the unit field area; however, it is appropriate if only at least one of them may be performed. Moreover, it may also be possible to perform the process to create a new unit field area based on a line, or the like, drawn by the user.

In the above embodiment, the process to register a field by the actual travel around the outer periphery of the field is not required; however, this function may be performed. That is, it may be possible to switch between the process to specify the field area based on the orthophoto and the process to specify the field area by the actually travel around the outer periphery of the field in accordance with the user's instruction, etc.

### DESCRIPTION OF REFERENCE NUMERALS

- 1: Rice transplanter (work vehicle)
- 7: Wireless communication terminal
- 50: Control unit
- 51: Travel control unit
- 80: Arithmetic unit
- 81: Display control unit
- 82: Map acquisition unit
- 83: Field specifying unit
- 84: Division unit
- 85: Correction unit
- 86: Route creation unit
- 100: Autonomous travel system

## Claims

1. An autonomous travel system comprising:
a map acquisition unit that acquires an orthophoto;
a field specifying unit that specifies a field area included in a map of the orthophoto acquired by the map acquisition unit;
a route creation unit that creates a travel route along which a work vehicle autonomously travels in the field area specified by the field specifying unit; and
a travel control unit that causes the work vehicle to autonomously travel along the travel route created by the route creation unit.

2. The autonomous travel system according to claim 1, comprising a display unit that displays an image, wherein
the display unit displays an image combining the map acquired by the map acquisition unit and the field area specified by the field specifying unit.

3. The autonomous travel system according to claim 1 or 2, comprising:
a division unit that further divides the field area into a plurality of unit field areas; and
a correction unit that removes a designated area from the unit field area or adds a designated area to the unit field area to update the unit field area.

4. The autonomous travel system according to claim 1 or 2, comprising:
a division unit that further divides the field area into a plurality of unit field areas; and
a correction unit that combines the plurality of designated unit field areas to obtain the one new unit field area.

5. The autonomous travel system according to claim 1 or 2, comprising:
a division unit that further divides the field area into a plurality of unit field areas; and
a correction unit that divides the one designated unit field area to obtain the plurality of new unit field areas.
